# FASCICULE DE BREVET EUROPEEN

(11) **EP 1 554 370 B1**
(45) Date de publication et mention de la délivrance du brevet: **31.05.2006**
(21) Numéro de dépôt: 03780297.2
(22) Date de dépôt: 24.10.2003
(51) Int. Cl.: C12G 1/02, B65D 8/00

(54) **PROCEDE DE TRAITEMENT DE LA VENDANGE EN VUE DE LA PRODUCTION DE VIN ET CONTENANT POUR LA VINIFICATION**
VERFAHREN ZUR BEHANDLUNG DER WEINLESE IM HINBLICK AUF DIE WEINHERSTELLUNG UND BEHÄLTER ZUR WEINHERSTELLUNG
GRAPE TREATMENT METHOD FOR WINE PRODUCTION AND WINEMAKING CONTAINER

(30) Priorité: 24.10.2002 FR 0213305
(43) Date de publication de la demande: 20.07.2005
(73) Titulaire: Vatelot, Yves, 33450 Saint Loubes (FR)
(72) Inventeur: Vatelot, Yves, 33450 Saint Loubes (FR)
(74) Mandataire: Fantin, Laurent
(86) Numéro de dépôt international: PCT/FR2003/050107
(87) Numéro de publication internationale: WO 2004/039937

(56) Documents cités:
- DE-C- 161 917
- FR-A- 2 495 107
- US-A- 4 826 029

## Description

La présente invention concerne un procédé de traitement de la vendange en vue de la production de vin.

L'invention couvre aussi le contenant nécessaire à ce procédé, plus particulièrement une barrique équipée pour la vinification, associée au procédé de traitement de la vendange.

La vinification en barrique est de plus en plus recherchée par les producteurs car elle conduit à des vins présentant des qualités gustatives tout à fait spécifiques et différentes de celles connues à ce jour.

La vinification en barrique consiste à assurer l'étape de fermentation directement dans une barrique et non pas dans des foudres en bois, dans des cuves métalliques ou dans des cuves en béton.

DE-C-161917 décrit un procédé de vinification en barrique.

Un premier problème est celui d'introduire la vendange dans le contenant, généralement une barrique en bois, plus particulièrement en chêne. Une autre contrainte est celle de récupérer le moût de raisin d'une part et le marc d'une autre à la fin de la fermentation en barrique. La présente invention propose une solution adaptée.

Cette solution doit aussi prendre en compte les paramètres économiques et il est nécessaire de pouvoir réutiliser les barriques ayant servi à la fermentation nonobstant l'équipement nécessaire à l'introduction et à la fermentation en barrique.

On sait aussi que durant la fermentation en barrique, si l'on souhaite que les tannins et les polyphénols notamment, s'expriment de la meilleure façon, il faut aussi provoquer une bonne imprégnation du gâteau de marc qui se forme par simple décantation. Ce gâteau est toujours présent quel que soit le contenant, quelles que soient les dimensions de ces contenants mais dans le cas présent, avec un contenant de petites dimensions, l'obstacle est aussi celui de l'accessibilité à l'intérieur, le trou de bonde étant de petit diamètre.

Dans une cuve de grande dimensions, il existe une méthode dite de pigeage qui consiste à assurer un mélange moût / marc par un mouvement alternatif vertical d'une canne manoeuvrée par un opérateur. Une telle action est renouvelée plusieurs fois par jour.

Le pigeage est difficilement praticable en l'occurrence car le seul accès d'une barrique est le trou de bonde de quelques centimètres de diamètre. Non seulement, l'ouverture est très réduite mais l'opération à renouveler sur chaque barrique deviendrait coûteuse et fastidieuse car il faut retirer le bouchon, agiter aussi bien que possible le contenu malgré l'exiguïté et refermer le bouchon de barrique puis transférer cet outil de pigeage et renouveler l'opération sur une autre barrique. Dans tous les cas, la perturbation mécanique ainsi créée est insuffisante pour obtenir de bons résultats.

Une autre méthode pour les contenants ayant un grand volume utilise une pompe qui aspire la fraction liquide pour la répandre sur le marc par aspersion. En traversant le gâteau, la fraction liquide imprègne ce marc et en exprime toutes les substances. De tels moyens et modalités sont inapplicables à des volumes comme ceux des barriques.

La vendange en sortie de récolte doit subir de préférence un traitement pré-fermentaire, notamment un contrôle en température pour éviter le démarrage intempestif de la fermentation, des saignées par prélèvement du premier jus et/ou une addition de produits naturels tels que du soufre, des enzymes.

Suivant les types de vin, le responsable oenologique peut être amené à doser le rapport marc / moût à introduire dans les barriques suivant les propriétés du raisin vendangé sur un même terroir. En effet, ces propriétés peuvent être modifiées par les variations climatiques, la date et les conditions de la récolte ou les saignées réalisées. Pour obtenir un vin de qualité, l'oenologue augmente le rapport de marc par rapport au moût pour conduire à une élévation du caractère tannique notamment.

La présente invention permet de résoudre les problèmes ainsi posés et de proposer un procédé donnant des résultats oenologiquement très satisfaisants, avec des moyens techniques réalisables industriellement et d'un coût acceptable pour ce type de vinification en barrique.

Le procédé de traitement de la vendange selon la présente invention et le contenant associé permettant la mise en oeuvre de ce procédé sont maintenant décrits en détail suivant un mode de réalisation particulier, non limitatif, en regard des dessins annexés sur lesquels les différentes figures représentent :
- figures 1A à 1G, une vue schématique des différentes étapes de traitement de la vendange,
- figure 2, une vue en perspective d'une barrique ouverte pour la mise en oeuvre du procédé,
- figure 3, une vue en perspective, isolée et détaillée, du fond de la barrique,
- figure 4, une vue éclatée d'un mode de réalisation de la trappe d'obturntion, et
- figure 5, une vue d'une barrique équipée selon la présente invention sur un support, au cours de la fermentation.

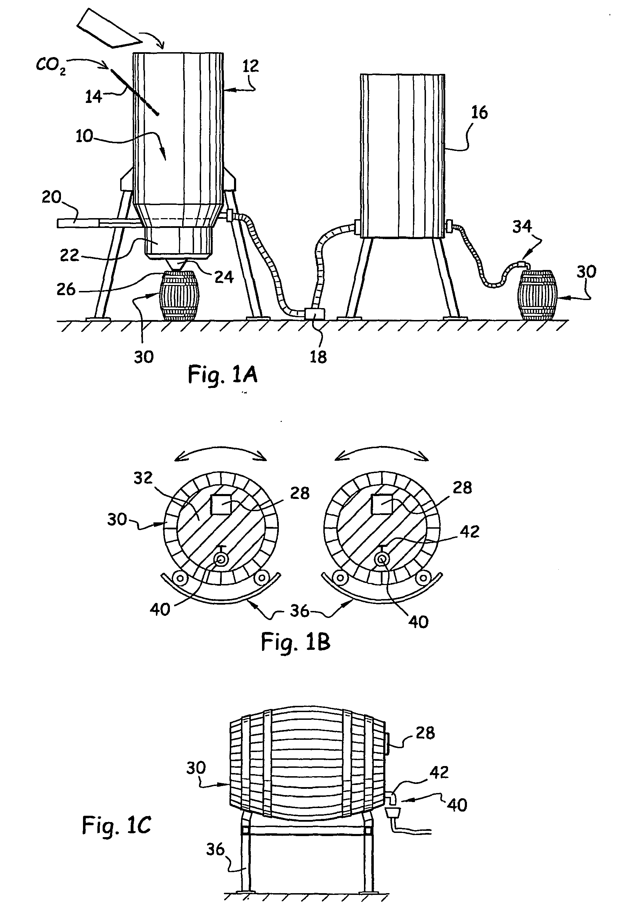

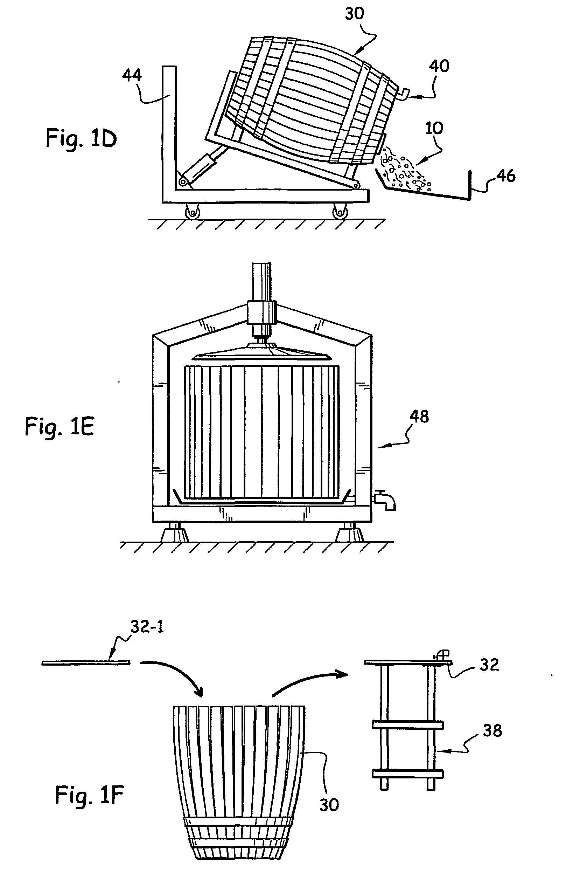

Le procédé selon l'invention comprend les étapes représentées sur les figure 1A à 1G.

A l'étape 1A, la vendange 10, après récolte, égrappage et foulage éventuel, est conduite vers une cuve 12 de pré-fermentation. Dans cette cuve, la vendange s'accumule et sous l'effet de la gravité, le moût se concentre en fond de cuve tandis que le marc a une tendance naturelle à former un chapeau.

Lorsque la cuve est complétée, on injecte si besoin, du CO2 par une canne 14 qui permet une mise en température de la vendange pour éviter le déclenchement de la fermentation, en plus d'un inertage qui limite l'oxydation. De même, au fur et à mesure, ou en une seule adjonction, on ajoute du soufre et des levures pour la fermentation à suivre. Le soufre peut d'ailleurs avoir été introduit préalablement, directement dans le fouloir.

A ce stade, on peut effectuer une première saignée et retirer une fraction de jus en sorte d'augmenter la proportion marc / jus. Ce jus ne sera plus réutilisé pour l'élaboration du vin selon le procédé de la présente invention.

En fin de remplissage, le jus accumulé dans cette cuve de pré-fermentation est retiré pour ne laisser dans la cuve essentiellement que le marc. Ce jus est transféré vers une cuve 16 garde-vin grâce à une pompe 18 .

On procède alors au remplissage des barriques en dosant la quantité de marc provenant de la cuve de pré-fermentation, grâce à une vanne 20, par exemple à guillotine qui délivre une quantité choisie de marc dans une trémie 22 tampon. Des moyens 24 d'obturation tout ou rien comprenant aussi un entonnoir 26, permettent d'entonner le marc, par une trappe 28 ménagée dans une barrique 30 maintenue debout, nécessairement dans un des fonds 32 de ladite barrique.

Cette même barrique 30 est complétée par du jus de la cuve 16 garde-vin, avec un robinet 34 entonneur, au cours de cette même étape de dosage/remplissage.

Ces barriques contiennent ainsi de la vendange préparée et dosée en rapport marc / jus, prête à la fermentation.

Les barriques 30 sont disposées sur des supports 36 qui peuvent être des rails parallèles ou des supports individuels plus sophistiqués avec des berceaux et des galets comme ceux disponibles dans le commerce sous la marque "OXO".

Le but est de faire osciller les barriques pour assurer une bonne imprégnation du marc par le jus. Or on sait que, lorsque le marc flotte, il est peu entraîné et la barrique tourne sans que le contenu bouge beaucoup. Les frottements sur les parois sont insuffisants pour assurer un brassage.

La présente invention propose de placer des moyens 38 fixes de brassage, décrits plus en détail ultérieurement. Ces moyens de brassage sont solidaires du couvercle portant la trappe 28.

Ainsi, lorsque la barrique est mise en rotation, les moyens 38 fixes de brassage permettent de brasser les deux phases présentes dans la barrique. C'est l'étape 1B.

Il se produit alors une extraction lente et homogène mais globale des tannins et polyphénols ainsi qu'un bon échange avec le bois dont la barrique est constituée.

Ces moyens de brassage présentent une très grande importance et jouent un rôle essentiel dans la qualité du produit final.

Ce même fond comporte aussi un piquage 40 avec une vanne 42.

A l'étape 1C, on se situe après fermentation, c'est-à-dire après la transformation du sucre en alcool, une quinzaine de jours pour donner un ordre de grandeur avec un brassage trois ou quatre fois par jour.

La phase liquide, du vin de goutte, est tirée grâce au piquage 40 et transférée vers une cuve garde-vin, non représentée, comme cela est fait de façon connue lorsque la fermentation est faite en cuve de grandes dimensions.

Le marc quant à lui subsiste dans la barrique et il faut le retirer pour le presser et en extraire le vin restant.

C'est l'étape 1D qui montre une potence 44 qui permet d'incliner la barrique après avoir ouvert la trappe 28.

Ce marc est collecté dans un bac 46 de transfert qui permet de remplir un pressoir 48, représenté schématiquement à l'étape 1E.

Ce pressoir permet d'exprimer le vin qui est aussi conduit vers des cuves garde-vin, comme le vin de goutte soutiré préalablement.

Plusieurs solutions sont possibles à ce stade du traitement de la vendange.

Soit les vins de goutte et de presse sont traités ensemble et donc assemblés soit ces deux vins sont traités indépendamment, chacun dans leurs propres barriques. Dans le présent mode de traitement, les deux vins sont traités séparément.

La barrique 30 est ensuite préparée pour recevoir ces vins. Le fond 32 portant la trappe 28, le piquage 40 et les moyens 38 fixes de brassage est retiré en ôtant préalablement les cercles 50 métalliques et en écartant les merrains. C'est l'étape 1F.

Ce fond équipé est remplacé par un fond 32-1 simple, neuf. Les cercles sont remontés et la barrique est simple et de type connu avec comme seul accès le trou'de bonde 52, obturé par un bouchon 54.

La barrique 30 ayant servi à la fermentation est ainsi réutilisée pour recevoir chacun des vins et les garder pour la fermentation malolactique au cours de laquelle les vins rouges perdent une partie de leur acidité.

Celle-ci peut se déclencher dans les quelques jours qui suivent la mise en barrique ou au plus tard dans les deux mois généralement et il est intéressant de réaliser cette étape dans la même barrique car les propriétés organoleptiques finales sont remarquables.

Le vin est ainsi replacé dans son contenant, à savoir sa barrique de fermentation, pour son élevage simple ou sur lie et pour la garde des grands crus.

Le nombre de barriques utilisées est réduit puisque le volume de marc est supprimé et qu'il se produit aussi une faible perte du liquide au cours des différentes étapes.

On constate que la vendange ainsi traitée permet de fondre de manière plus précoce les tannins du bois avec ceux du vin.

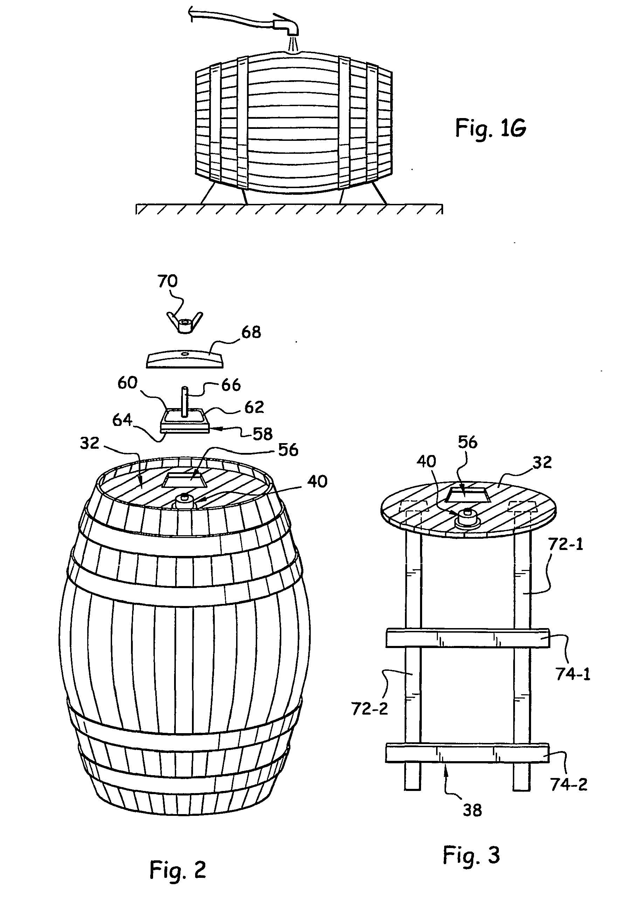

Sur la figure 2, on montre que le fond 32 est découpé avec une ouverture 56, carrée dans le mode de réalisation retenu. La trappe 28 comprend une plaque 58 d'obturation susceptible de passer par l'ouverture prise dans sa diagonale.

Cette plaque 58 comporte un joint 60 périphérique, de préférence torique, disposé dans une rainure 62, usinée dans cette même plaque.

Des moyens 64 raidisseurs peuvent être adjoints pour assurer un plaquage efficace.

Une tige 66 de liaison fait saillie au-delà d'une traverse 68 de fixation, qui vient sur la face extérieur du fond tandis qu'un écrou 70, dans ce cas un écrou papillon, permet d'assurer le plaquage du joint porté par la plaque 58 contre le fond 32, sur sa face interne.

Les moyens 38 fixes de brassage sont détaillés sur la figure 3, sous une forme de réalisation préférentielle mais assurément non limitative.

Ces moyens comprennent deux barres 72-1, 72-2 verticales, parallèles, en inox pour respecter les normes agroalimentaires, solidaires du fond 32 et deux barres transversales 74-1 et 74-2, rapportées sur ces deux barres verticales, par exemple par soudage.

Ces moyens de brassage sont d'un grand intérêt pour assurer une imprégnation douce mais complète du marc, dans la totalité de son volume et en extraire ainsi toutes les composantes, de façon lente mais profonde.

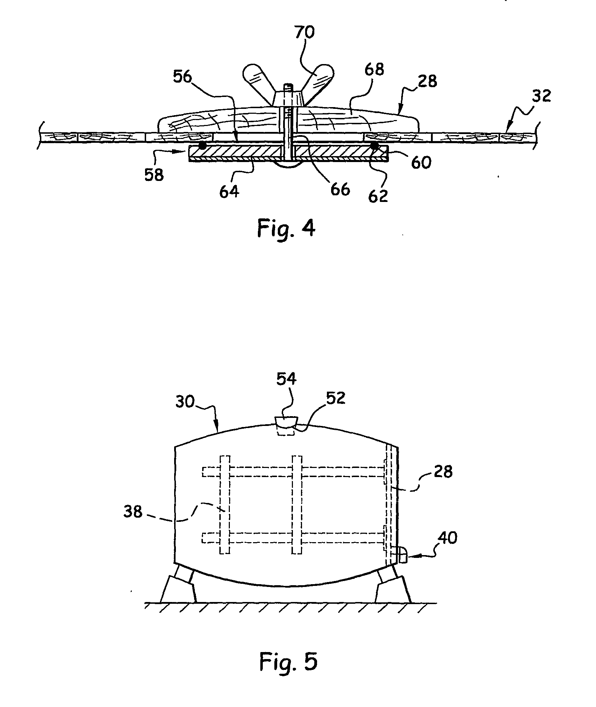

Sur les figures 4 et 5, on retrouve des représentations explicatives complémentaires permettant de mieux apprécier l'agencement selon la présente invention. Les éléments identiques portent les mêmes références.

On peut aussi envisager tout moyen d'obturation de l'ouverture et notamment une ouverture circulaire avec un bouchon du type à expansion radiale.

Un tel procédé requiert des moyens disponibles dans l'industrie avec des coûts relativement réduits comparés aux gains de qualité du vin obtenus par ce procédé.

## Revendications

1. Procédé de traitement de la vendange (10) en vue d'une vinification en barrique, ladite vendange ayant été éventuellement égrappée et foulée, **caractérisé en ce qu'**il comprend les étapes suivantes :
- recueillir la vendange entière dans une cuve (12) de pré-fermentation,
- remplir une barrique (30) avec du marc et du jus à travers une ouverture (56) ménagée dans un de ses fonds (32), dit fond équipé,
- laisser fermenter jusqu'à transformation complète des sucres en alcool en faisant osciller régulièrement la barrique équipée de moyens fixes de brassage (38) pour assurer une extraction douce des tannins et polyphénols,
- tirer le vin de goutte par écoulement et le disposer dans un garde-vin (16),
- retirer le marc par la même ouverture ménagée dans un de ses fonds et presser ce marc pour recueillir le vin de presse et le disposer dans un garde-vin, et
- mise en barrique de ces vins.

2. Procédé de traitement de la vendange selon la revendication 1, **caractérisé en ce que** l'on substitue un fond simple au fond équipé et on remplit les barriques avec ces vins de goutte et/ou de presse par le trou de bonde desdites barriques.

3. Procédé de traitement de la vendange selon la revendication 1 ou 2, **caractérisé en ce que** l'on effectue des saignées à partir de la cuve de pré-fermentation.

4. Procédé de traitement de la vendange selon l'une quelconque des revendications précédentes, **caractérisé en ce qu'**il comprend les étapes supplémentaires suivantes :
- retirer le jus de la cuve de pré-fermentation et le placer dans un garde-vin,
- conserver le marc dans cette cuve de pré-fermentation, et
- introduire dans la barrique le marc et le jus dans un rapport donné.

5. Procédé de traitement de la vendange selon l'une quelconque des revendications précédentes, **caractérisé en ce que** la vendange subit dans la cuve de pré-fermentation une mise en température et/ou une adjonction de levures.

6. Barrique (30) pour la mise en oeuvre du procédé de traitement de la vendange selon l'une des revendications précédentes, **caractérisée en ce qu'**elle comprend un fond (32) équipé comprenant une ouverture (56) avec une plaque (58) d'obturation, un piquage (40) et des moyens (38) fixes de brassage.

7. Barrique (30) selon la revendication 6, **caractérisée en ce que** l'ouverture (56) est carrée et **en ce que** la plaque (58) d'obturation passe par cette ouverture prise dans sa diagonale, comporte un joint (60) périphérique disposé dans une rainure (62) de cette même plaque, cette plaque étant également munie d'une tige (66) de liaison, d'une traverse (68) de fixation, d'un écrou (70) agencés en sorte d'assurer le plaquage du joint (60) contre la face interne du fond (32).

8. Barrique (30) selon la revendication 6 ou 7, **caractérisée en ce que** les moyens (38) fixes de brassage comprennent deux barres (72-1, 72-2) verticales, parallèles, solidaires du fond (32) et deux barres transversales (74-1, 74-2), rapportées sur ces deux barres verticales.

## Claims

1. A method of processing a crop of grapes (10) with a view to wine making in a barrel, said crop of grapes possibly having been stemmed and pressed, **characterised in that** it comprises the following steps:
- collecting the entire crop of grapes in a prefermentation vessel (12),
- filling a barrel (30) with marc and juice through an opening (56) formed in one of its end (32), referred to as the equipped end,
- leaving to ferment until there is complete conversion of the sugars into alcohol by regularly rocking the barrel equipped with fixed stirring means (38) in order to ensure gentle extraction of the tannins and polyphenols,
- drawing off the drained wine by flow and disposing it in a wine storage vessel (16),
- removing the marc through the same opening provided in one of its ends and pressing this marc in order to collect pressed wine and to dispose it in a wine storage vessel, and
- putting these wines in barrels.

2. A method of processing a crop of grapes according to claim 1, **characterised in that** a simple end is substituted for the equipped end and the barrels are filled with these drained and/or pressed wines through the bungholes in said barrels.

3. A method of processing a crop of grapes according to claim 1 or 2, **characterised in that** bleeding off from the prefermentation vessel is carried out.

4. A method of processing a crop of grapes according to any one of the preceding claims, **characterised in that** it comprises the following supplementary steps:
- drawing off the juice from the prefermentation vessel and placing it in a wine storage vessel,
- storing the marc in this prefermentation vessel, and
- introducing the marc and juice into the barrel in a given ratio.

5. A method of processing a crop of grapes according to any one of the preceding claims, **characterised in that** the crop of grapes undergoes, in the prefermentation vessel, a temperature adjustment and/or an addition of yeast.

6. A barrel (30) for implementing the grape crop processing method according to one of the preceding claims, **characterised in that** it comprises an equipped end (32) comprising an opening (56) with a closure plate (58), a drain (40) and fixed stirring means (38).

7. A barrel (30) according to claim 6, **characterised in that** the opening (56) is square and **in that** the closure plate (58) passes through this opening taken in its diagonal, and comprises a peripheral seal (60) disposed in a groove (62) in this same plate, this plate also being provided with a connecting rod (66), a fixing cross-member (68) and a nut (70) arranged so as to ensure that the seal (60) is pressed against the internal face of the end (32).

8. A barrel (30) according to claim 6 or 7, **characterised in that** the fixed stirring means comprise two parallel vertical bars (72-1, 72-2) fixed to the end (32) and two transverse bars (74-1, 74-2) attached to these two vertical bars.

## Patentansprüche

1. Verfahren zur Verarbeitung des Leseguts (10) für eine Weinbereitung im Fass, wobei das Lesegut gegebenenfalls entrappt und gemaischt wurde, **dadurch gekennzeichnet, dass** es folgende Schritte umfasst:
- Aufnehmen des gesamten Leseguts in einen Vorgärbehälter (12),
- Befüllen eines Barrique-Fasses (30) mit Trester und Saft durch eine in einem seiner Böden (32) eingebrachte Öffnung (56), wobei dieser Boden als ausgerüsteter Boden bezeichnet wird,
- Gären lassen, bis sich der Zucker umfassend in Alkohol umgewandelt hat, wobei hierfür das mit feststehenden Mitteln (38) zum Mischen ausgerüstete Fass regelmäßig in Schwingung versetzt wird, um eine sanfte Extraktion der Gerbstoffe und der Polyphenole zu gewährleisten,
- Auffangen des abfließenden Seihmosts und Lagern desselben in einem Weinlager (16),
- Entnehmen des Tresters durch die gleiche in einem seiner Böden eingebrachte Öffnung und Pressen dieses Tresters zur Gewinnung des Pressmosts und Lagern desselben in einem Weinlager, und
- Barrique-Fass-Befüllung mit diesen Mosten.

2. Verfahren zur Verarbeitung des Leseguts nach Anspruch 1, **dadurch gekennzeichnet, dass** der ausgerüstete Boden durch einen einfachen Boden ersetzt wird und die Barrique-Fässer durch das Spundloch in diesen Fässern mit dem Seihmost und/oder dem Pressmost gefüllt werden.

3. Verfahren zur Verarbeitung des Leseguts nach Anspruch 1 oder 2, **dadurch gekennzeichnet, dass** aus dem Vorgärbehälter abgestochen wird.

4. Verfahren zur Verarbeitung des Leseguts nach einem der vorangegangenen Ansprüche, **dadurch gekennzeichnet, dass** es die folgenden zusätzlichen Schritte umfasst:
- Entnehmen des Saftes aus dem Vorgärbehälter und Lagerung in einem Weinlager,
- Belassen des Tresters in diesem Vorgärbehälter und
- Einbringen des Tresters und des Saftes in einem gegebenen Verhältnis zueinander in das Barrique-Fass.

5. Verfahren zur Verarbeitung des Leseguts nach einem der vorangegangenen Ansprüche, **dadurch gekennzeichnet, dass** das Lesegut in dem Vorgärbehälter auf Temperatur gebracht wird und/oder Hefen zugesetzt werden.

6. Barrique-Fass (30) zur Durchführung des Verfahrens zur Verarbeitung des Leseguts nach einem der vorangegangenen Ansprüche, **dadurch gekennzeichnet, dass** es einen ausgerüsteten Boden (32) umfasst, welcher eine Öffnung (56) mit einer Verschlussplatte (58), einen Anzapfstutzen (40) und feststehende Mittel (38) Mischen umfasst.

7. Barrique-Fass (30) nach Anspruch 6, **dadurch gekennzeichnet, dass** die Öffnung (56) quadratisch ist und dass die Verschlussplatte (58) diagonal durch diese Öffnung passt, eine umlaufende Dichtung (60) aufweist, welche in einer Nut (62) dieser Platte angeordnet ist, wobei diese Platte ebenfalls mit einer Verbindungsstange (66), einer Befestigungstraverse (68), einer Mutter (70) versehen ist, die derart angeordnet sind, dass sie das Anliegen der Dichtung (60) an der Innenseite des Bodens (32) gewährleisten.

8. Barrique-Fass (30) nach Anspruch 6 oder 7, **dadurch gekennzeichnet, dass** die feststehenden Mittel (38) zum Mischen zwei einstückig mit dem Boden (32) ausgebildete, parallele, senkrechte Stangen (72-1, 72-2) und zwei an diesen zwei senkrechten Stangen angesetzte Querstangen (74-1, 74-2) umfassen.
